# EUROPÄISCHE PATENTSCHRIFT

(11) **EP 1 414 607 B1**
(45) Veröffentlichungstag und Bekanntmachung des Hinweises auf die Patenterteilung: **23.04.2008**
(21) Anmeldenummer: 02764523.3
(22) Anmeldetag: 19.07.2002
(51) Int. Cl.: B23B 27/16

(54) **SPANABHEBENDES SCHNEIDWERKZEUG UND SCHNEIDPLATTE IN DONUT-FORM**
METAL CUTTING TOOL AND CUTTING PLATE PROVIDED IN THE SHAPE OF A DONUT
OUTIL DE COUPE PAR ENLEVEMENT DE COPEAUX ET MATRICE DE COUPE DE FORME ANNULAIRE

(30) Priorität: 26.07.2001 DE 10136635; 26.02.2002 DE 10208266
(43) Veröffentlichungstag der Anmeldung: 06.05.2004
(60) Teilanmeldung: 07010335.3
(73) Patentinhaber: CeramTec AG Innovative Ceramic Engineering, 73207 Plochingen (DE)
(72) Erfinder: EDER, Otto, 73257 Köngen (DE); ZITZLAFF, Wolfgang, 73230 Kirchheim/Teck (DE)
(74) Vertreter: Scherzberg, Andreas Hans
(86) Internationale Anmeldenummer: PCT/DE2002/002665
(87) Internationale Veröffentlichungsnummer: WO 2003/013770

(56) Entgegenhaltungen:
- EP-A- 0 753 366
- DE-A- 1 602 817
- GB-A- 1 567 004
- US-A- 3 731 356

## Beschreibung

Die Erfindung betrifft ein spanabhebendes Schneidwerkzeug und eine Spannpratze.

Stand der Technik für einen Schneideinsatz, hier Wendeschneidplatte aus Keramik, sind Schneidplatten mit glatter Oberfläche oder mit verschiedensten Spannmulden, die gespannt in einem Trägerwerkzeug zur Zerspanung von metallischen Werkstoffen eingesetzt werden. Nachteile dieser Technik bei glatten Schneidplattenoberflächen ist die zur Spannkraft fehlende formschlüssige Verbindung zum Trägerwerkzeug. Bei Schneidplatten mit Spannmulde ist zwar zusätzlich eine formschlüssige Verbindung vorhanden, die Schneidplatte wird durch das Spannen in der Spannmulde jedoch von den Spannelementen kräftemäßig sehr stark auf einer relativ kleinen Fläche belastet, was zu Spannungen in der Schneidplatte oder gar Brüchen führen kann. Weiterhin sind bei den heute bestehenden Spannsystemen nicht alle möglichen positiven Faktoren in einem System vereinigt.

Aus der EP 0 753 366 B1 ist ein spanabhebendes Schneidwerkzeug bekannt, bestehend im wesentlichen aus einem Trägerwerkzeug, das eine Ausnehmung zur Aufnahme einer Schneidplatte aufweist, die Schneidplatte mit einer Spannmulde versehen ist, die von einer Spannpratze im Trägerwerkzeug gehalten ist und die Spannpratze über eine Spannschraube auf dem Trägerwerkzeug festliegt. An der Spannpratze ist ein Druckstück angeordnet, das auf der zur Schneidplatte gewandten Unterseite mit einem Nocken versehen ist, der mit der Spannmulde in spannender Berührung steht. Weiterhin zieht die Spannpratze das Druckstück in Richtung Spannschraube.

DE-A-16 02 817 zeigt ein spanabhebendes Schneidwerkzeug bestehend aus einem Trägerwerkzeug, das eine Ausnehmung zur Aufnahme einer Schneidplatte aufweist, die Schneidplatte mit einer Spannmulde versehen ist, die von einer Spannpratze im Trägerwerkzeug gehalten ist, die Spannpratze über eine Spannschraube auf dem Trägerwerkzeug festliegt, und auf der zur Schneidplatte gewandten Unterseite die Spannpratze mit einem Nocken versehen ist, der mit der Spannmulde in Berührung steht, wobei die Spannmulde kreisförmig ausgebildet ist und in der Mitte eine kugel- bzw. kreisförmige Erhebung aufweist und der Nocken in die Spannmulde formschlüssig und spannend eingreift und dabei die Spannkraft über die Spannpratze auf die Schneidplatte überträgt.

Der Erfindung liegt die Aufgabe zu Grunde mit einfachen Komponenten so viele positive Faktoren in einem System zu vereinigen wie möglich und durch deren Zusammenspiel eine optimale Spannsituation zu erzielen. Dabei sollen die Fertigungstoleranzen der verschiedenen Bauteile kompensiert werden, eine zusätzliche formschlüssige Verbindung mit kontrollierter Spannkraftbegrenzung entstehen und ein den Zerspanungskräften entgegenwirkende Gestaltung der Bauteile zu Grunde liegen, um einen Spannkraftverlust während des Einsatzes zu vermeiden.

Erfindungsgemäß wird diese Aufgabe durch die Merkmale des Anspruchs 1 gelöst.

Erfindungsgemäß besteht das spanabhebende Schneidwerkzeug im wesentlichen aus einem Trägerwerkzeug, das eine Ausnehmung zur Aufnahme einer Schneidplatte aufweist, die Schneidplatte mit einer Spannmulde versehen ist, die von einer Spannpratze im Trägerwerkzeug gehalten ist, die Spannpratze über eine Spannschraube auf dem Trägerwerkzeug festliegt, an der Spannpratze ein Druckstück angeordnet ist, welches auf der Schneidplatte aufliegt und auf der zur Schneidplatte gewandten Unterseite mit einem Nocken versehen ist, der mit der Spannmulde in Berührung steht und die Spannpratze das Druckstück in Richtung Spannschraube zieht, wobei die Spannmulde kreisförmig ausgebildet ist und in der Mitte eine kugel- bzw. kreisförmige Erhebung aufweist und der Nocken an dem Druckstück aus einem hieran angepassten kreisförmigen Ring besteht, der die Erhebung umgreifend in die Spannmulde formschlüssig und spannend eingreift und dabei die Spannkraft über die Spannpratze auf die Schneidplatte überträgt.

Hierdurch ist ein optimaler Sitz der Schneidplatte im Trägerwerkzeug sichergestellt.

In vorteilhafter Ausgestaltung weist die Spannpratze auf ihrer über dem Druckstück befindlichen Unterseite eine kugelförmige Erhebung auf, die in eine kugelförmige Vertiefung auf dem Druckstück eingreift.

Hierbei ist zweckmäßigerweise der Radius der kugelförmigen Erhebung an der Spannpratze größer als der Radius der kugelförmigen Vertiefung im Druckstück, wodurch eine Kraftübertragung über die Außenkanten erfolgen kann.

Das Druckstück ist bevorzugt über eine Schraube mit Spiel an der Spannpratze befestigt.

Zum Schutz der Spannpratze vor auftreffenden Spänen hat das Druckstück sinnvollerweise eine frontseitige Erhöhung.

Bevorzugt besteht das Druckstück aus einem verschleißfesten Material wie Hartmetall, HSS oder Keramik.

In bevorzugter Ausgestaltung umgreift den Ring am Druckstück zentrisch oder konzentrisch eine Freilegung und diese Freilegung zentrisch oder konzentrisch eine Auflagefläche, die zur Mitte des Ringes hin in einem Winkel ansteigt.

Vorteilhaft ist die Spannpratze über eine Schräge mit einer Spannkraftbegrenzung auf dem Trägerwerkzeug geführt.

In alternativer Ausführungsform ist die Spannpratze über zwei Schrägen auf dem Trägerwerkzeug geführt, wobei die beiden Schrägen parallel verlaufen und durch einen Schlitz voneinander getrennt sind.

Zweckmäßigerweise verlaufen die beiden Schrägen unter einem Winkel von 10° bis 45° zur Längsachse der Spannpratze.

Vorteilhafterweise haben die beiden Schrägen eine zylindrische Oberfläche und das Trägerwerkzeug weist hieran angepasste zylindrische Mantelflächen auf.

Eine Schneidplatte ist mit einer Spannmulde versehen, wobei die Spannmulde kreisförmig ausgebildet ist und in der Mitte eine kugel- bzw. kreisförmige Erhebung aufweist und die Erhebung oberhalb des Muldenbodens und unterhalb der Schneidplattenoberseite liegt. Bevorzugt ist die Verwendung in einem Schneidwerkzeug, wie es weiter oben beschrieben ist.

Zweckmäßig ist die Ausbildung als Wendeschneidplatte.

Eine erfindungsgemäße Spannpratze zur Verwendung an einem spanabhebenden Schneidwerkzeug, welches im wesentlichen aus einem Trägerwerkzeug besteht, das eine Ausnehmung zur Aufnahme einer Schneidplatte aufweist, die Schneidplatte mit einer Spannmulde versehen ist, die von der Spannpratze im Trägerwerkzeug gehalten ist, die Spannpratze über eine Spannschraube auf dem Trägerwerkzeug festlegbar ist, an der Spannpratze ein Druckstück angeordnet ist, das auf der zur Schneidplatte gewandten Unterseite mit einem Nocken versehen ist, der mit der Spannmulde in Berührung stehbar ausgebildet ist, zeichnet sich dadurch aus, dass der Nocken an dem Druckstück aus einem kreisförmigen Ring besteht, zum Umgreifen einer Erhebung in der Spannmulde der Schneidplatte.

Weitere Merkmale der Erfindung ergeben sich aus den Figuren, die nachfolgend beschrieben sind. Es zeigt:
- Fig. 1: eine Ansicht einer Schneidplatte,
- Fig. 2: eine Ansicht des Schneidwerkzeugs mit eingesetzter Schneidplatte,
- Fig. 3: das Schneidwerkzeug gemäß Fig. 2 in Explosionsdarstellung,
- Fig. 4: das Schneidwerkzeug gemäß Fig. 2 im Schnitt,
- Fig. 5: eine Vergrößerung des Zusammenspiels von Spannpratze-Druckstück-Schneidplatte,
- Fig. 6: ein Schnitt durch eine Spannmulde,
- Fig. 7: eine Ansicht der Oberseite eines Druckstückes,
- Fig. 8: eine Ansicht der Unterseite eines Druckstückes,
- Fig. 9: eine Ansicht einer Spannpratze und
- Fig. 10: ein vergrößerter Schnitt Spannpratze-Druckstück-Schneidplatte.

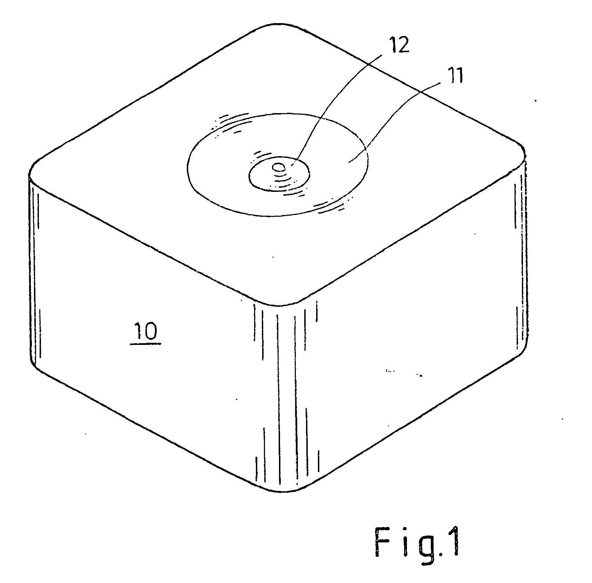

Fig. 1 zeigt einen Schneideinsatz bzw. eine Schneidplatte 10 als Wendeschneidplatte für die spanabhebende Bearbeitung von metallischen Werkstücken. Die Schneidplatte 10 weist in der Mitte eine kreisförmige Spannmulde 11 auf, wobei wiederum in deren Mitte eine kugel- bzw. kreisförmige Erhebung 12 platziert ist. Diese Spannmulde 11 und Erhebung 12 sollen zur Fixierung der Schneidplatte in einer passenden Aufnahme, hier Plattensitz genannt, auf einem geeigneten Trägerwerkzeug dienen.

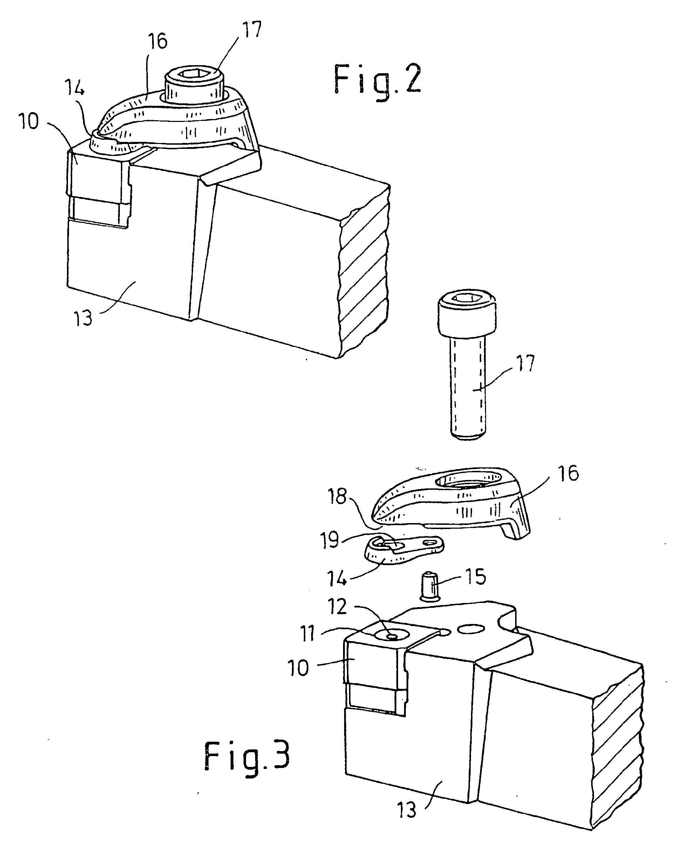

Fig. 2 zeigt die räumliche Darstellung der beschriebenen Schneidplatte 10 im gespannten Zustand auf einem Trägerwerkzeug 13. Besonderes Augenmerk ist hierbei auf das Druckstück 14 (siehe auch Fig. 3) zu richten, welches an der Unterseite die Gegenform zur vorher beschriebenen Spannmulde in der Schneidplatte aufweist. Die durch Anziehen der Spannschraube 17 entstehende Spannkraft wird über die Spannpratze 16 auf die Schneidplatte 10 übertragen. Als besonderes Merkmal besitzt die Spannpratze auf der über der Schneidplatte befindlichen Unterseite eine kugelförmige Erhebung 18, die in eine kugelförmige Vertiefung 19 in das Druckstück 14 hineinragt und mit der Schraube 15 mit Spiel befestigt ist.

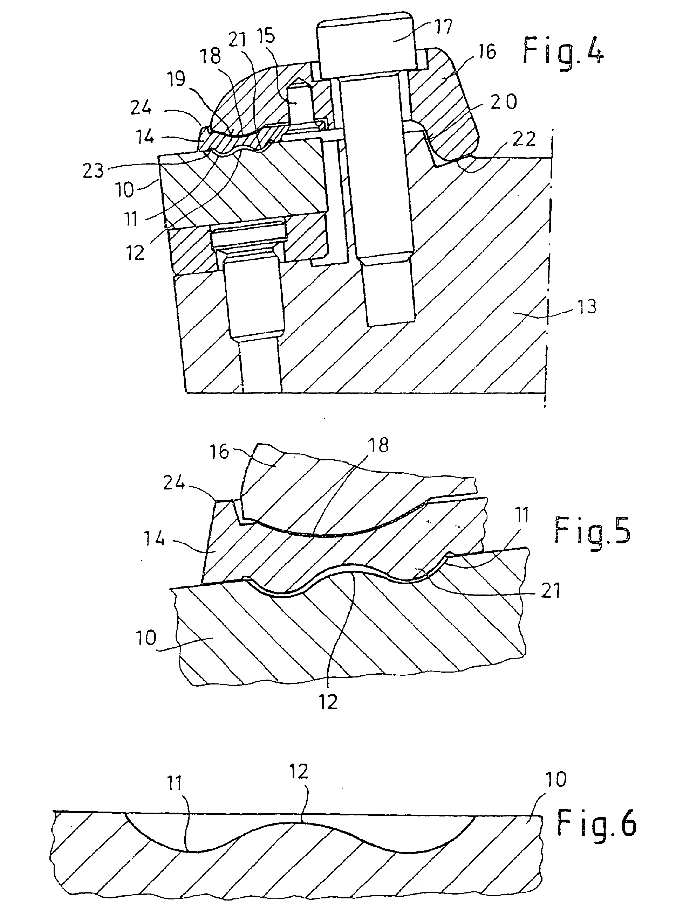

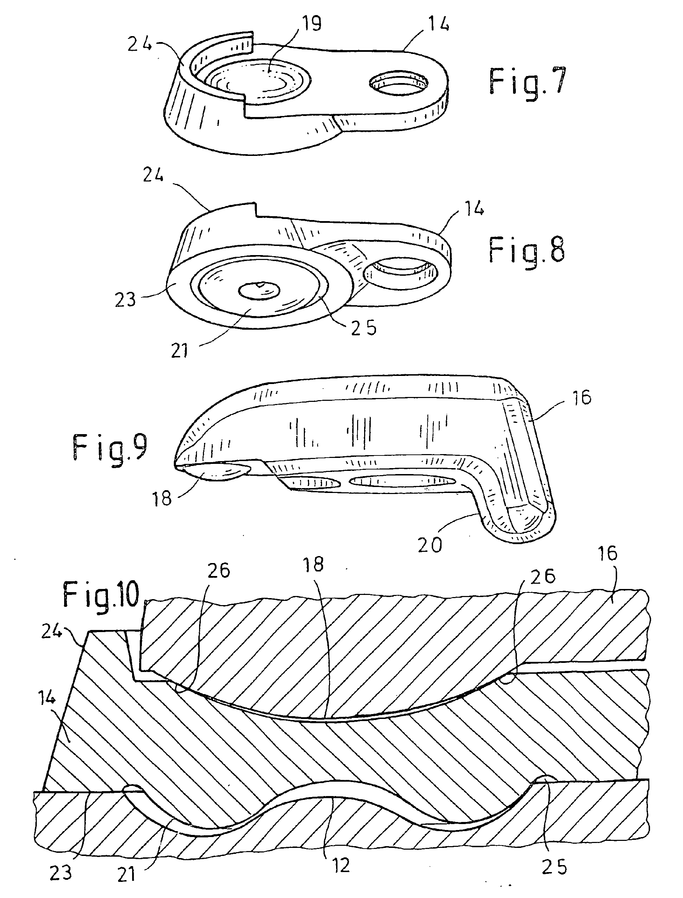

Fig. 4 zeigt einen Querschnitt durch den Plattensitz, in dem das Zusammenspiel der Spannelemente beschrieben werden soll. Beim Anziehen der Spannschraube 17 bewegt sich die Spannpratze 16 nach unten und gleitet mit der Schrägen 20 an einer ähnlichen Schrägen im Trägerwerkzeug gleichzeitig nach hinten. Da die Spannpratze über die kugelförmige Erhebung 18, an der der Schrägen gegenüberliegenden Seite durch die entstehende Spannkraft mit dem Druckstück 14 formschlüssig durch die kugelförmige Vertiefung 19 verbunden ist, und die Erhebung 21 des Druckstückes wiederum formschlüssig in die Mulde der Schneidplatte eingreift, wird die seitwärts in die Plattensitzecke gerichtete Bewegung durch die einzelnen Spannelemente auf die Schneidplatte übertragen. Siehe dazu auch Fig. 10. Beim Erreichen der Spannkraftbegrenzung 22 vergrößert sich die Hebelbewegung der Spannpratze. Das Druckstück 14 übt einen noch größeren Druck auf die Schneidplatte aus und presst nun noch zusätzlich mit seiner Auflagefläche 23 auf die Oberfläche der Schneidplatte. Das herausragende Merkmal dieses Zusammenspieles ist, das in Kombination aller Elemente ein Herauswandern der Schneidplatte aus ihrem Plattensitz durch die vorhandenen Formen und Schrägen nicht mehr möglich ist.

Fig. 5 zeigt noch einmal eine Vergrößerung des Spannpratzen-Druckstück-Schneidplatten Zusammenspieles.

Fig. 6 zeigt einen Schnitt durch die kreisförmige Mulde 11 der Schneidplatte. In deren Mitte ist die kreisförmige - bzw. kugelförmige Erhebung 12 zu erkennen. Besonders Merkmal ist hierbei, dass die Erhebung 12 die Form einer Kugel hat und oberhalb des Muldenbodens und unterhalb der Schneidplattenoberfläche liegt. Die Muldenkontur ist im Querschnitt kreisförmig und verläuft gewissermaßen um die senkrechte Achse der Kugel, was an die Backform des amerikanischen Donuts erinnert.

In Fig. 7 ist die Oberseite des Druckstückes 14 dargestellt, die als besonderes Merkmal die beschriebene Kalotte 19 bzw. kugelförmige Einsenkung oder Vertiefung aufweist.

In Fig. 8 ist die Unterseite des Druckstückes 14 dargestellt, die als besonderes Merkmal eine Erhebung 21, Donut-Form aufweist, die die Gegenform der Spannmulde auf der Schneidplatte ist. Zusätzliche Merkmale sind die Auflagefläche 23, die zur Donut-Mitte hin in einem Winkel ansteigt, und die Freilegung 25, die die Muldenkante der Schneidplatte vor Flächenberührung und damit Beschädigungen und unzureichenden Sitz schützen soll. Siehe hierzu auch Fig. 10.

Eine weitere Besonderheit des Druckstückes ist seine Beschaffenheit aus einem verschleißfestem Material wie Hartmetall, HSS oder Keramik und die Erhöhung 24 der Außenkontur zum Schutz der Spannpratze vor den Spänen, die sich bei der Zerspannung bilden (siehe Fig. 7). Die Kugel/Kalottenverbindung dient auch zum Toleranz- und Lageausgleich zwischen dem Spannelement und der Schneidplatte.

Fig. 9 zeigt die Unterseite der Spannpratze mit der beschriebenen kugelförmigen Erhebung 18. Besonderes Merkmal dieser Kugel ist außerdem, dass der Durchmesser der Kugel etwas größer ist als der Durchmesser der Kalotte im Druckstück 14, um die Kraftübertragung über die Kugel/Kalottenaußenkanten 26, siehe Fig. 10, zu ermöglichen und nicht über eine punktförmige Belastung am Kalottenboden und der Kugelspitze. Ein weiteres Merkmal ist die Schräge 20 an der Spannpratze (siehe Fig. 4 und Fig. 9), die über eine Schräge im Trägerwerkzeug führt. Diese Schrägen haben den Effekt, dass beim Anziehen der Spannschraube eine seitliche Bewegung der Spannelemente erfolgt, die die Schneidplatte in die Ecke des Plattensitzes ziehen soll. Diese Spannpratze ist für Trägerwerkzeuge mit kleineren Abmessungen bestimmt.

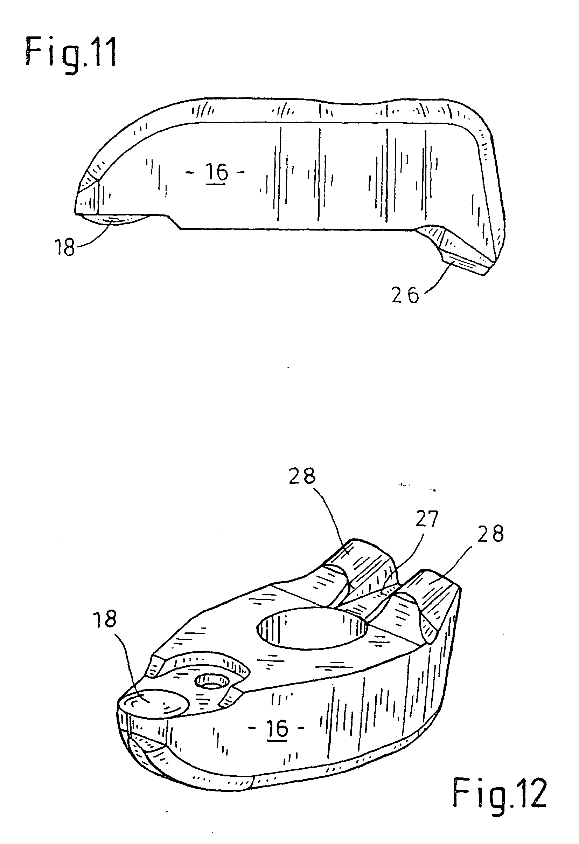

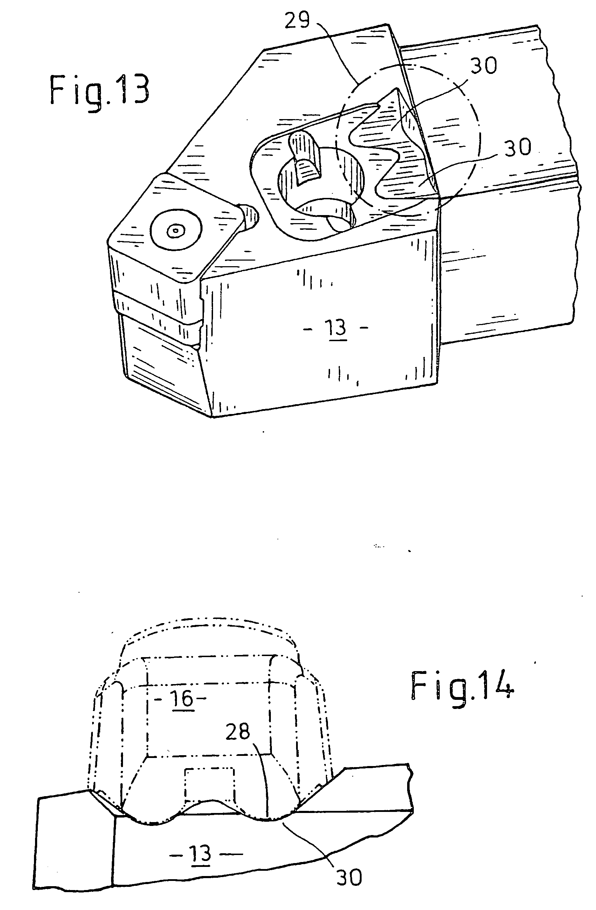

Fig. 11 zeigt die Unterseite einer weiteren Variante der Spannpratze 16 mit der beschriebenen kugelförmigen Erhebung 18. Diese Spannpratze 16 ist für Trägerwerkzeuge bestimmt, deren Abmessungen den Einbau dieses, durch seine Bauart, größeren Elementes zulässt. Besonderes Merkmal dieser Spannpratze ist die im hinteren Bereich gegenüber Fig. 9 anders geformte Schräge 26. Sie verläuft wie in Fig. 12 zu sehen durch einen Schlitz 27 getrennt, unter einem winkel von 10° bis 45°. Das erfinderische Merkmal dieser beiden Schrägen 26 sind deren zylindrische Oberflächen 28. Diese haben den Effekt, dass beim Anziehen der Spannschraube zusätzlich zur seitlichen Bewegung der Spannpratze eine Selbstzentrierung in einer eigens dafür erzeugten Ausnehmung 29 auf dem entsprechenden Trägerwerkzeug 13 erfolgt. Siehe hierzu Fig. 13.

Das besondere Merkmal der Ausnehmung 29 auf dem Trägerwerkzeug 13 in Fig. 13 ist wiederum die zylindrische Oberfläche der parallel verlaufenden zwei Schrägen 30, die in ihrem Radius etwas größer ausgelegt sind, als die zylindrischen Oberflächen 28 der Spannpratze. Dieses ermöglicht somit eine annähernde Linienberührung zwischen den Schrägen und ein selbstzentrierendes Entlanggleiten der sich berührenden Zylindermantelflächen 28 und 30. Fig. 14 zeigt dieses Zusammenspiel von Spannpratze und Trägerwerkzeug im Querschnitt.

## Patentansprüche

1. Spanabhebendes Schneidwerkzeug im wesentlichen bestehend aus einem Trägerwerkzeug (13), das eine Ausnehmung zur Aufnahme einer Schneidplatte (10) aufweist, die Schneidplatte (10) mit einer Spannmulde (11) versehen ist, die von einer Spannpratze (16) im Trägerwerkzeug (13) gehalten ist, die Spannpratze (16) über eine Spannschraube (17) auf dem Trägerwerkzeug (13) festliegt, an der Spannpratze (16) ein Druckstück (14) angeordnet ist, welches auf der Schneidplatte (10) aufliegt und auf der zur Schneidplatte (10) gewandten Unterseite mit einem Nocken versehen ist, der mit der Spannmulde (11) in Berührung steht und die Spannpratze (16) das Druckstück (14) in Richtung Spannschraube (17) zieht, wobei die Spannmulde (11) kreisförmig ausgebildet ist und in der Mitte eine kugel- bzw. kreisförmige Erhebung (12) aufweist und der Nocken an dem Druckstück (14) aus einem hieran angepassten kreisförmigen Ring (21) besteht, der die Erhebung (12) umgreifend in die Spannmulde (11) formschlüssig und spannend eingreift und dabei die Spannkraft über die Spannpratze (16) auf die Schneidplatte (1) überträgt.

2. Schneidwerkzeug nach Anspruch 1, **dadurch gekennzeichnet, dass** die Spannpratze (16) auf ihrer über dem Druckstück (14) befindlichen Unterseite eine kugelförmige Erhebung (18) aufweist, die in eine kugelförmige Vertiefung (19) auf dem Druckstück (14) eingreift.

3. Schneidwerkzeug nach Anspruch 2, **dadurch gekennzeichnet, dass** der Radius der kugelförmigen Erhebung (18) an der Spannpratze (16) größer als der Radius der kugelförmigen Vertiefung (19) im Druckstück (14) ist.

4. Schneidwerkzeug nach einem der Ansprüche 1 bis 3, **dadurch gekennzeichnet, dass** das Druckstück (14) über eine Schraube (15) mit Spiel an der Spannpratze (16) befestigt ist.

5. Schneidwerkzeug nach einem der Ansprüche 1 bis 4, **dadurch gekennzeichnet, dass** das Druckstück (14) eine frontseitige Erhöhung (24) zum Schutz der Spannpratze (16) vor auftreffenden Spänen hat.

6. Schneidwerkzeug nach einem der Ansprüche 1 bis 5, **dadurch gekennzeichnet, dass** das Druckstück (14) aus einem verschleißfesten Material wie Hartmetall, HSS oder Keramik besteht.

7. Schneidwerkzeug nach einem der Ansprüche 1 bis 6, **dadurch gekennzeichnet, dass** den Ring (21) am Druckstück (14) zentrisch oder konzentrisch eine Freilegung (25) umgreift.

8. Schneidwerkzeug nach Anspruch 7, **dadurch gekennzeichnet, dass** die Freilegung (25) zentrisch oder konzentrisch eine Auflagefläche (23) umgreift, die zur Mitte des Ringes (21) hin in einem Winkel ansteigt.

9. Schneidwerkzeug nach einem der Ansprüche 1 bis 8, **dadurch gekennzeichnet, dass** die Spannpratze (16) über eine Schräge (20) mit einer Spannkraftbegrenzung (22) auf dem Trägerwerkzeug (13) geführt ist.

10. Schneidwerkzeug nach einem der Ansprüche 1 bis 8, **dadurch gekennzeichnet, dass** die Spannpratze (16) über zwei Schrägen (28) auf dem Trägerwerkzeug (13) geführt ist, wobei die beiden Schrägen (28) parallel verlaufen und durch einen Schlitz (27) voneinander getrennt sind.

11. Schneidwerkzeug nach Anspruch 10, **dadurch gekennzeichnet, dass** die beiden Schrägen unter einem Winkel von 10° bis 45° zur Längsachse der Spannpratze verlaufen.

12. Schneidwerkzeug nach Anspruch 10 oder 11, **dadurch gekennzeichnet, dass** die beiden Schrägen (28) eine zylindrische Oberfläche haben und das Trägerwerkzeug (13) hieran angepasste zylindrische Mantelflächen (30) aufweist.

13. Spannpratze zur Verwendung an einem spanabhebenden Schneidwerkzeug, im wesentlichen bestehend aus einem Trägerwerkzeug (13), das eine Ausnehmung zur Aufnahme einer Schneidplatte (10) aufweist, die Schneidplatte (10) mit einer Spannmulde (11) versehen ist, die von der Spannpratze (16) im Trägerwerkzeug (13) gehalten ist, die Spannpratze (16) über eine Spannschraube (17) auf dem Trägerwerkzeug (13) festlegbar ist, an der Spannpratze (16) ein Druckstück (14) angeordnet ist, das auf der zur Schneidplatte (10) gewandten Unterseite mit einem Nocken versehen ist, der mit der Spannmulde (11) in Berührung stehbar ausgebildet ist, **dadurch gekennzeichnet, dass** der Nocken an dem Druckstück (14) aus einem kreisförmigen Ring (21) besteht, zum Umgreifen einer Erhebung (12) in der Spannmulde (11) der Schneidplatte (10).

## Claims

1. A metal-cutting tool, substantially consisting of a supporting tool (13) which has a recess to accommodate a cutting plate (10) that is provided with a clamping trough (11) and is held in the supporting tool (13) by a clamping claw (16), the clamping claw (16) being fixed on the supporting tool (13) by way of a clamping screw (17), there being arranged on the clamping claw (16) a pressure piece (14) which rests on the cutting plate (10) and, on the underside facing the cutting plate (10), is provided with a cam which is in contact with the clamping trough (11), and the clamping claw (16) pulling the pressure piece (14) in the direction of the clamping screw (17), wherein the clamping trough (11) is formed in a circular shape and in the centre has a spherical or circular elevation (12), and the cam on the pressure piece (14) consists of a circular ring (21) that is adapted thereto and engages into the clamping trough (11) in a form-locking and clamping manner whilst surrounding the elevation (12) and thereby transfers the clamping force by way of the clamping claw (16) to the cutting plate (1 - *sic*).

2. Cutting tool according to claim 1, **characterised in that** the clamping claw (16) has on its underside located above the pressure piece (14) a spherical elevation (18) which engages into a spherical depression (19) on the pressure piece (14).

3. Cutting tool according to claim 2, **characterised in that** the radius of the spherical elevation (18) on the clamping claw (16) is greater than the radius of the spherical depression (19) in the pressure piece (14).

4. Cutting tool according to one of claims 1 to 3, **characterised in that** the pressure piece (14) is secured to the clamping claw (16) with clearance by way of a screw (15).

5. Cutting tool according to one of claims 1 to 4, **characterised in that** the pressure piece (14) has a raised part (24) on the front side to protect the clamping claw (16) from impinging filings.

6. Cutting tool according to one of claims 1 to 5, **characterised in that** the pressure piece (14) consists of a wear-resistant material, such as hard metal, HSS or ceramic material.

7. Cutting tool according to one of claims 1 to 6, **characterised in that** an open region (25) centrically or concentrically surrounds the ring (21) on the pressure piece (14).

8. Cutting tool according to claim 7, **characterised in that** the open region (25) is centrically or concentrically surrounded by a bearing surface (23) that rises towards the centre of the ring (21) at an angle.

9. Cutting tool according to one of claims 1 to 8, **characterised in that** the clamping claw (16) is guided on the supporting tool (13) by way of an incline (20) with a form of clamping-force limitation (22).

10. Cutting tool according to one of claims 1 to 8, **characterised in that** the clamping claw (16) is guided on the supporting tool (13) by way of two inclines (28 - *sic*), with the two inclines (28) extending in parallel and being separated from each other by means of a slit (27).

11. Cutting tool according to claim 10, **characterised in that** the two inclines extend at an angle of 10° to 45° in relation to the longitudinal axis of the clamping claw.

12. Cutting tool according to claim 10 or 11, **characterised in that** the two inclines (28) have a cylindrical surface, and the supporting tool (13) has cylindrical lateral surfaces (30) adapted thereto.

13. Clamping claw for use on a metal-cutting tool, substantially consisting of a supporting tool (13) which has a recess to accommodate a cutting plate (10) that is provided with a clamping trough (11) held in the supporting tool (13) by the clamping claw (16), the clamping claw (16) being fixable on the supporting tool (13) by way of a clamping screw (17), there being arranged on the clamping claw (16) a pressure piece (14) which, on the underside facing the cutting plate (10), is provided with a cam which is formed so that it can be in contact with the clamping trough (11), **characterised in that** the cam on the pressure piece (14) consists of a circular ring (21) in order to surround an elevation (12) in the clamping trough (11) of the cutting plate (10).

## Revendications

1. Outil de coupe par enlèvement de copeaux, dans lequel :
- un outil support (13) présente une cavité pour accueillir une plaquette de coupe (10) munie d'une cavité de serrage (11) maintenue dans l'outil support (13) auquel elle est fixée par une griffe de serrage (16) qui porte une pièce de pression (14) appliquée sur la plaquette de coupe (10) et présentant sur sa face inférieure tournée vers la plaquette (10) une came en contact avec la cavité de serrage (11),
- la griffe de serrage (16) tire la pièce de pression (14) en direction de la vis de serrage (17),
- la cavité de serrage (11) a une forme circulaire avec en son milieu un bossage de forme sphérique ou circulaire,
- la came sur la pièce de pression (14) est constituée d'un anneau circulaire (21) qui lui est adapté et qui, en l'enveloppant, est en prise dans la cavité de serrage (11) avec le bossage (12) en le serrant avec verrouillage par combinaison de formes et qui transmet ainsi par la griffe de serrage la force de serrage à la plaquette de coupe (10).

2. Outil de coupe selon la revendication 1, **caractérisé en ce que** la griffe de serrage (16) présente, sur sa face inférieure située au-dessus de la pièce de pression (14), un bossage (18) de forme sphérique engagé dans une cavité (19) de forme sphérique creusée dans la pièce de pression (14).

3. Outil de coupe selon la revendication 2, **caractérisé en ce que** le rayon du bossage sphérique (18) sur la griffe de serrage (16) est supérieur au rayon de la cavité (19) de forme sphérique dans la pièce de pression (14).

4. Outil de coupe selon une des revendications 1 à 3, **caractérisé en ce que** la pièce de pression (14) est fixée par une vis (15) avec du jeu sur la griffe de serrage (16).

5. Outil de coupe selon une des revendications 1 à 4, **caractérisé en ce que** la pièce de pression (14) présente un bossage frontal (24) pour éviter à la griffe de serrage (16) des impacts de copeaux.

6. Outil de coupe selon une des revendications 1 à 5, **caractérisé en ce que** la pièce de pression (14) est faite d'un matériau résistant à l'usure, tel qu'un métal durci, un acier à coupe très rapide ou une céramique.

7. Outil de coupe selon une des revendications 1 à 6, **caractérisé en ce que** l'anneau (21) sur la pièce de pression (14) est entouré concentriquement par un évidement (25).

8. Outil de coupe selon la revendication 7, **caractérisé en ce que** l'évidement (25) entoure concentriquement une portée d'appui (23) qui s'élève en pente en direction du milieu de l'anneau (21).

9. Outil de coupe selon une des revendications 1 à 8, **caractérisé en ce que** la griffe de serrage (16) est guidée sur l'outil support (13) par un chanfrein (20) avec une limitation de la force de serrage (22).

10. Outil de coupe selon une des revendications 1 à 8, **caractérisé en ce que** la griffe de serrage (16) est guidée par deux chanfreins (28) sur l'outil support (13), ces deux chanfreins étant parallèles et séparés l'un de l'autre par une fente (27).

11. Outil de coupe selon la revendication 10, **caractérisé en ce que** les deux chanfreins font un angle de 10 à 45° avec l'axe longitudinal de la griffe de serrage.

12. Outil de coupe selon la revendication 10 ou 11, **caractérisé en ce que** les deux chanfreins (28) présentent chacun une surface cylindrique et l'outil support (13) présente en surface des portées (30) adaptées à ces chanfreins.

13. Griffe de serrage pour utilisation dans un outil de coupe par enlèvement de copeaux, composé essentiellement d'un outil support (14) présentant une cavité pour accueillir une plaquette de coupe (10) munie d'une cavité de serrage (11) maintenue dans l'outil support (13) par la griffe de serrage (16) qui peut être fixée à cet outil par une vis de serrage (17), et sur cette griffe de serrage (16) est disposée une pièce de pression (14) munie sur sa face inférieure en regard de la plaquette de coupe (16), d'une came qui est conçue pour être en contact avec la cavité de serrage (11), cette griffe de serrage étant **caractérisée en ce que** la came sur la pièce de pression (14) est constituée par un anneau circulaire (21), pour entourer un bossage (12) dans la cavité de serrage (11) de la plaquette de coupe (10).
